# EUROPEAN PATENT APPLICATION

(11) **EP 2 896 300 A1**
(43) Date of publication of application: **22.07.2015**
(21) Application number: 13836811.3
(22) Date of filing: 21.05.2013
(51) Int. Cl.: A23L 1/16

(54) **FROZEN COOKED NOODLE AND METHOD FOR MANUFACTURING SAME**

(30) Priority: 12.09.2012 JP 2012200424; 15.10.2012 CN 201210389331
(71) Applicant: Nisshin Foods Inc., Tokyo 101-8441 (JP)
(72) Inventor: MIYAJIMA, Takaaki, Fujimino-shi Saitama 356-8511 (JP); IRIE, Kentarou, Fujimino-shi Saitama 356-8511 (JP); FUKUDOME, Shinichi, Fujimino-shi Saitama 356-8511 (JP)
(74) Representative: Blodig, Wolfgang
(86) International application number: PCT/JP2013/064091
(87) International publication number: WO 2014/041853

(57) **Abstract**

Provided is a frozen cooked noodle capable of maintaining a favorable texture even after thawing. A method for manufacturing a frozen cooked noodle, comprising: obtaining a noodle produced from raw material flour comprising 5 to 80% by mass of processed tapioca starch; gelatinizing the noodle; allowing a composition comprising gelatin to attach to the gelatinized noodle thus obtained; and freezing the noodle attached with the composition.

## Description

### [Technical Field]

The present invention relates to a frozen cooked noodle and a method for manufacturing the same.

### [Background Art]

In general, a frozen cooked noodle is manufactured by boiling a noodle produced from ingredients such as wheat flour, cooling the boiled noodle with water and then quickly freezing the cooled noodle. The noodle before freezing normally contains a large amount of water resulting from the aforementioned boiling and water-cooling steps. However, when a noodle with high water content is frozen, it takes time for the temperature of noodle to pass the freezing point (approximately 0 to-5°C) during freezing and thawing, consequently promoting the retrogradation of starch contained in the noodle. Thus, conventional frozen cooked noodles have a problem that the noodle is hardened due to retrogradation of starch and the texture thereof is deteriorated. This problem is more noticeable with a frozen noodle which is slowly thawed by, for example, natural thawing, as compared with a frozen noodle which is quickly thawed by, for example, microwaving. Particularly, a noodle which is slowly thawed after long-term frozen storage has a problem of having a hard yet brittle, inelastic and crumbly texture.

Methods for improving the texture of a frozen cooked noodle have been proposed previously. For example, Patent Literature 1 discloses that a frozen gelatinized noodle manufactured from a composition containing wheat flour, starch and curdlan retains a favorable texture even after thawing with running water or slow thawing. Also, Patent Literature 2 discloses that a frozen gelatinized noodle manufactured from raw material flour containing wheat flour with a crude protein content of 12% or more, processed tapioca starch and gluten retains a favorable texture even after thawing at refrigeration temperature or slow thawing. Patent Literature 3 discloses that noodle strands are boiled by intermittently immersing them in hot water to increase the gelatinization degree of the noodle, to thereby compensate for a reduced gelatinization degree caused by retrogradation of noodle occurring during slow thawing, resulting in prevention of the deteriorated texture of the noodle.

However, when the aforementioned noodles were frozen-stored for a long time, the noodle after thawing had unsatisfactory elasticity. Moreover, when the aforementioned noodles were frozen-stored with sauces and dressings, separation of water occurred and the sauces and dressings after thawing became partly watery, resulting in further unfavorable consequences. In light of the above, there is a demand for further methods for improving the texture of a frozen cooked noodle after thawing. A frozen cooked noodle capable of maintaining a favorable texture comparable to that of a noodle before freezing even after it is slowly thawed after frozen-storage, particularly frozen-storage with sauces and dressings, is desired.

### [Citation List]

### [Patent Literature]

[Patent Literature 1] JP-A-2000-342207
[Patent Literature 2] JP-A-10-042811
[Patent Literature 3] JP-A-2001-252036

### [Summary of Invention]

### [Technical Problem]

An object of the present invention is to provide a frozen cooked noodle which is prevented from deterioration in quality and maintains a favorable texture even after it is slowly thawed by, for example, natural thawing at room temperature or thawing with running water.

### [Solution to Problem]

The present inventors conducted various studies in order to achieve the aforementioned object. As a result, they have found that a frozen cooked noodle capable of maintaining a favorable texture even after slow thawing can be manufactured by gelatinizing a noodle produced from raw materials containing processed tapioca starch, then allowing a composition containing gelatin to attach to the noodle, and then freezing the noodle, thereby completing the present invention.

That is, the present invention provides a method for manufacturing a frozen cooked noodle, comprising: obtaining a noodle produced from raw material flour comprising 5 to 80% by mass of processed tapioca starch; gelatinizing the noodle; allowing a composition containing gelatin to attach to the gelatinized noodle thus obtained; and freezing the noodle attached with the composition.

The present invention also provides a method for manufacturing a cooked noodle, comprising thawing the aforementioned frozen cooked noodle.

### [Advantageous Effects of Invention]

The frozen cooked noodle obtained by the production method of the present invention can maintain a favorable texture comparable to that of a noodle before freezing even after thawing, particularly after slow thawing. The frozen cooked noodle obtained by the production method of the present invention do not become soft, and retain a smooth and elastic, favorable texture, even after it is slowly thawed after long-term frozen storage.

### [Description of Embodiments]

In the present specification, a noodle refer to a food obtained by molding dough prepared by kneading raw material flour containing grain flour and starch, and its type and shape are not particularly limited. Examples of the noodle in the present specification include so-called noodle strands such as Japanese thick noodles (*udon*), Japanese buckwheat noodles (*soba*), Chinese noodles and long pasta; short pastas such as macaroni and penne; flat pastas; and dough wrappers such as wrappers for Chinese dumpling wrappers (*gyoza*) and spring rolls (*harumaki*).

In the present invention, the noodle used for manufacturing a frozen cooked noodle is a noodle produced from raw material flour containing processed tapioca starch. Tapioca starch is starch manufactured from the rhizome of cassava of the family Euphorbiaceae. Processed tapioca starch can be manufactured by treating the tapioca starch by chemical processing or chemical modification. As the chemical processing or chemical modification, a known method such as esterification, etherification and cross-linking can be used. Examples of esterified tapioca starch include acetylated tapioca starch, phosphorylated tapioca starch and octenyl succinic acid-modified tapioca starch. Examples of etherified tapioca starch include hydroxypropylated tapioca starch and carboxymethylated tapioca starch. Examples of cross-linked tapioca starch include phosphoric acid cross-linked tapioca starch and glycerol cross-linked tapioca starch.

Acetylated tapioca starch can be manufactured by, for example, reacting tapioca starch with acetic anhydride. Phosphoric acid cross-linked tapioca starch can be manufactured by, for example, cross-linking tapioca starch and phosphorus oxychloride. Hydroxypropylated tapioca starch can be manufactured by, for example, etherifying tapioca starch with propylene oxide.

The raw material flour may contain any of the processed tapioca starches singly or in combination of any two or more thereof. The processed tapioca starch contained in the raw material flour can be preferably one or more selected from the group consisting of esterified tapioca starch, etherified tapioca starch, and cross-linked tapioca starch, more preferably one or more selected from the group consisting of esterified tapioca starch and etherified tapioca starch, even more preferably one or more selected from the group consisting of acetylated tapioca starch and hydroxypropyl tapioca starch.

The content of the processed tapioca starch in the raw material flour may be from 5 to 80% by mass, preferably from 20 to 60% by mass of the total amount of the raw material flour. When the content of the processed tapioca starch is less than 5% by mass, the frozen cooked noodle after thawing loses smoothness and elasticity, resulting in a hard texture. On the other hand, when the content exceeds 80% by mass, the frozen cooked noodle after thawing lacks smoothness and elasticity resulting in an exceedingly soft texture.

Also, the raw material flour may contain, in addition to the processed tapioca starch, grain flour commonly used for producing a noodle, such as wheat flour, durum wheat flour, durum semolina flour, udon noodle flour, buckwheat flour and rice flour. The content of the aforementioned grain flour in the raw material flour may be 18 to 95% by mass of the total amount of the raw material flour. When the content of grain flour is less than 18% by mass, the taste and flavor of a noodle are deteriorated. On the other hand, when the content of grain flour exceeds 95% by mass, the texture of the frozen cooked noodle after thawing is not improved.

The aforementioned noodle may further contain, in addition to the processed tapioca starch and the grain flour, other ingredients commonly used for producing a noodle, such as gluten, starch other than the processed tapioca starch, an egg, an emulsifier, a viscosity adjusting agent, and a seasoning. The content of the other ingredients in the noodle is 30% by mass or less relative to 100% by mass of the raw material flour.

The noodle can be produced by molding, by a common method, dough prepared by kneading the raw material flour and, if necessary, the other ingredients with water in accordance with a common method. For example, a noodle of predetermined shape can be produced by adding the raw material flour with the other ingredients as needed and an adequate amount of water (for example, from 20 to 55 parts by mass of water relative to 100 parts by mass of raw material flour and other ingredients), followed by kneading to prepare dough, and subsequently, rolling out and then cutting the dough thus obtained. Alternatively, a noodle of predetermined shape can be produced by extruding the dough obtained by the procedure mentioned above through a die with small holes. These noodles may be provided as a semi-fresh noodle or a dried noodle, which are produced by further subjecting the noodle a drying step, or as a fresh noodle, which are produced without a drying step.

Alternatively, the noodle used in the method for manufacturing a frozen cooked noodle of the present invention may be a commercially available fresh noodle, semi-fresh noodle or dried noodle as long as it is produced from raw material flour containing the processed tapioca starch in the amounts specified above.

In the present invention, the noodle prepared by the procedure mentioned above is then gelatinized. A method for gelatinizing the noodle is not particularly limited as long as it is a method capable of gelatinizing starch in the noodle, and any known gelatinization method may be adopted. For example, gelatinization of the noodle can be carried out by a method of boiling the noodle by immersing it in hot water, a method of steaming the noodle, a combination of these methods and the like. The noodle thus gelatinized is then cooled after removing sliminess left on the noodle surface, as needed, by washing with water. Cooling can be carried out by a known method such as water cooling and wind cooling.

The gelatinized noodle is then brought into contact with a composition containing gelatin. By this operation, the gelatin-containing composition is allowed to attach to the gelatinized noodle. A means for bringing the gelatin-containing composition into contact with the gelatinized noodle is preferably a means capable of allowing the composition to attach to the entire surface of the noodle, and examples of such means include spraying, spreading, immersing, and adding and mixing. Among them, from the viewpoint of economic and simplicity, spraying or adding and mixing are preferable.

The gelatin-containing composition may be a composition having gelatin dissolved therein, and the composition may be in a liquid form, a solid form, a semi-solid form, a sol form or a gel form. The gelatin contained in the composition may be gelatin commonly used in foods, such as one prepared from beef bones and skin, shark cartilage, pork bones and skin, and so on.

According to one embodiment, the gelatin-containing composition may be a product dissolving gelatin in water, which is in the form of a liquid, a semi-solid, a sol or a gel, and prepared by dissolving gelatin in water, and it may be preferably an aqueous gelatin solution. The content of gelatin in the product dissolving gelatin in water is 0.1 to 8% by mass, preferably 0.3 to 6% by mass. When the content of gelatin in the product dissolving gelatin in water is less than 0.1% by mass, the frozen cooked noodle after thawing loses smoothness and elasticity and becomes soft, hence the texture is not improved. Moreover, the appearance of the noodle after thawing is impaired. On the other hand, when the content exceeds 8% by mass, the noodles stick to each other, to become difficult to be loosened after thawing and to be unevenly thawed.

The amount of the product dissolving gelatin in water attached to the gelatinized noodle is 3% by mass or more, preferably 10% by mass or more relative to 100% by mass of the gelatinized noodle before contact with the product. When the amount of the product attached is less than 3% by mass, attachment to the noodle becomes insufficient, thereby limiting the effect of the present invention. Although there is no particular limitation to the upper limit of the amount of the product attached, when the amount is way too excessive, the noodle is embedded in the product dissolving gelatin in water, to be difficult to loosen the noodle and the product dissolving gelatin in water upon eating.

According to another embodiment, the gelatin-containing composition may be a gelatin-containing sauce prepared by dissolving gelatin in a sauce for noodle. As the sauce for noodle, any sauce may be used as long as it is a commonly used sauce for noodle such as a soup, a dressing, a sauce and a dried powder. Examples of the sauce for noodle include, but are not limited to, a tomato-based sauce such as meat sauce and Neapolitan sauce; a white sauce such as carbonara sauce; a brown sauce; an oil-based sauce; a noodle soup (*mentsuyu*); a stock; a Chinese soup; and dried powder obtained by freeze-drying these sauces. The content of gelatin in the gelatin-containing sauce is 0.1 to 8% by mass, preferably 0.3 to 6% by mass. When the content of gelatin in the gelatin-containing sauce is less than 0.1% by mass, the frozen cooked noodle after thawing loses smoothness and elasticity and becomes soft, hence the texture is not improved. Moreover, the appearance of the noodle after thawing is impaired. On the other hand, when the content exceeds 8% by mass, the noodles stick to each other or the noodle and the sauce form a lump, etc., to become difficult to be loosened after thawing and to be unevenly thawed.

The amount of the gelatin-containing sauce attached to the gelatinized noodle is 3% by mass or more, preferably 10% by mass or more relative to 100% by mass of the gelatinized noodle before contact with the sauce. When the amount of the sauce attached is less than 3% by mass, attachment to the noodle becomes insufficient, thereby limiting the effect of the present invention. There is no particular limitation to the upper limit of the amount of the sauce attached, and a form in which the noodle is immersed in a gelatin-containing soup, a form in which macaroni is immersed in a gelatin-containing gratin sauce, and the like are also encompassed.

Subsequently, the noodle attached with the gelatin-containing composition is subjected to a freezing treatment. In the freezing treatment, only the noodle attached with the gelatin-containing composition may be frozen, or the noodle may be frozen with the commonly used sauce for noodle mentioned above. For example, in the case of a noodle attached with a product dissolving gelatin in water, such as an aqueous gelatin solution, it may be frozen directly or with the sauce for noodle further added. Also, for example, in the case of a noodle attached with a gelatin-containing sauce, it may be frozen directly or with the sauce for noodle further added. The sauce for noodle to be further added may be the same kind as or a different kind from the sauce already attached to the noodle. Also, the sauce for noodle to be further added does not need to be attached to the entire noodle.

The freezing treatment may be either quick freezing or slow freezing; however, quick freezing is preferable. For example, the noodle having a gelatin-containing composition adhered thereto may be quickly frozen at -20 to -50°C. When a noodle is frozen, it may be frozen in individually sized packages. Once the noodle is frozen, it may be stored under normal frozen-storage conditions, for example, in a freezer at -15°C.

The frozen cooked noodle can be manufactured by the procedure mentioned above. The frozen cooked noodle manufactured in accordance with the method of the present invention may be quickly thawed using a microwave oven and the like before eating, or it may be slowly thawed statically at room temperature. Alternatively, in the case that the frozen noodle is packaged, it is also possible to thaw it with running water by placing the packaged frozen noodle in running water.

The frozen cooked noodle provided by the present invention described above retains a favorable texture comparable to that of a noodle which is not frozen even after it is thawed after long-term frozen storage. Particularly, the frozen cooked noodle maintains a smooth and elastic, favorable texture even after it is thawed by slow thawing such as natural thawing at room temperature. The frozen cooked noodle is suitably applied to a lunch box or food materials for take-out foods as frozen food materials intended to be consumed after natural thawing.

### [Examples]

Hereinbelow, the present invention will be described further in detail with reference to Examples; however, the present invention is not limited only to these Examples.

### (Production Examples 1 to 11)

Durum wheat semolina flour (Leone G: Nisshin Flour Milling Inc.) and acetylated tapioca starch (Ajisai; the product of Matsutani Chemical industry Co., Ltd.) or hydroxypropylated tapioca starch (Yuri; the product of Matsutani Chemical industry Co., Ltd.) were mixed in the amounts shown in Table 1 below, and 30 parts by mass of water was added thereto, followed by kneading to obtain a noodle dough. Using a pasta making machine, the dough was extruded under a reduced pressure condition of -600 mmHg to produce fresh macaroni. The fresh macaroni thus obtained was boiled in hot water until a yield of 210% was obtained, then cooled with water, drained and then divided into polyethylene trays at 100 g per tray. To 100 g of the boiled macaroni thus divided, an aqueous solution containing 2% by mass of gelatin (GBL-200; the product of Nitta Gelatin Inc.) was added, followed by thorough mixing to allow 20 g of the aqueous gelatin solution to attach to the entire surface of the boiled macaroni. Subsequently, the boiled macaroni attached with the aqueous gelatin solution was quickly frozen at - 35°C, whereby the frozen cooked macaronis of Production Examples 1 to 11 were produced.

### (Test Example 1)

The frozen cooked macaronis of Production Examples 1 to 11 were removed from the trays and packed in polypropylene bags, and then stored at -18°C. After three months, the frozen macaronis were removed from the bags and naturally thawed at room temperature of 20°C. The pastas after thawing were evaluated by 10 panelists based on the evaluation criteria shown in Table 2, and average scores were obtained. The results are shown in Table 1.

**[Table 1]**

| Raw material flour (% by mass) | Production Example | | | | | | | | | | |
|---|---|---|---|---|---|---|---|---|---|---|---|
| | 1 | 2 | 3 | 4 | 5 | 6 | 7 | 8 | 9 | 10 | 11 |
| Durum semolina | 100 | 95 | 80 | 60 | 40 | 20 | 15 | 95 | 60 | 20 | 15 |
| Acetylated tapioca starch | - | 5 | 20 | 40 | 60 | 80 | 85 | - | - | - | - |
| Hydroxypro pylated tapioca starch | - | - | - | - | - | - | - | 5 | 40 | 80 | 85 |
| Mouth feel | 2.2 | 3.8 | 4.1 | 4.3 | 4.0 | 3.5 | 1.2 | 3.7 | 4.3 | 3.6 | 1.9 |
| Texture | 1.4 | 3.0 | 4.2 | 4.4 | 4.4 | 4.1 | 2.3 | 3.1 | 4.4 | 4.5 | 3.2 |

**[Table 2]**

| | | |
|---|---|---|
| Mouth feel of noodle | 5 | Mouth feel is very smooth and favorable. |
| | 4 | Mouth feel is smooth and slightly favorable. |
| | 3 | Mouth feel is slightly smooth |
| | 2 | Mouth feel is slightly less smooth and poor. |
| | 1 | Mouth feel lacks smoothness and is poor. |
| Texture of noodle | 5 | Noodle an adequately elastic and favorable texture without crumbliness. |
| | 4 | Noodle has a slightly crumbly, but elastic and favorable texture. |
| | 3 | Noodle has a slightly inelastic, brittle and crumbly texture. |
| | 2 | Noodle has inelastic, brittle, and crumbly texture. |
| | 1 | Noodle has an extremely inelastic, brittle, and crumbly texture. |

### (Production Examples 12 to 18)

Except for allowing 20 g of an aqueous solution containing gelatin (GBL-200; the product of Nitta Gelatin Inc.) in the amounts shown in Table 3 to attach to 100 g of boiled macaroni, the frozen cooked macaronis of Production Examples 12 to 18 were produced in the same manner as in Production Example 4.

### (Test Example 2)

The frozen cooked macaronis of Production Examples 12 to 18 were frozen-stored and then naturally thawed in the same manner as in Test Example 1. The pastas after thawing were evaluated by 10 panelists based on the evaluation criteria shown in Table 2, and average scores were obtained. The results are shown in Table 3. Also, the results of Production Example 4 are shown again in Table 3.

**[Table 3]**

| Raw material flour (% by mass) | Production Example | | | | | | | |
|---|---|---|---|---|---|---|---|---|
| | 12 | 13 | 14 | 15 | 4 | 16 | 17 | 18 |
| Durum semolina | 60 | 60 | 60 | 60 | 60 | 60 | 60 | 60 |
| Acetylated tapioca starch | 40 | 40 | 40 | 40 | 40 | 40 | 40 | 40 |
| Amount of aqueous gelatin solution attached | 20 | 20 | 20 | 20 | 20 | 20 | 20 | 20 |
| Concentration of aqueous gelatin solution (% by mass) | 0 | 0.05 | 0.1 | 0.3 | 2.0 | 6.0 | 8.0 | 10.0 |
| Mouth feel | 1.9 | 2.6 | 3.4 | 3.9 | 4.3 | 4.1 | 3.8 | 3.5^{*1} |
| Texture | 1.6 | 2.7 | 3.7 | 4.0 | 4.4 | 4.4 | 4.1 | 3.9 |

| | | | | | | | | |
|---|---|---|---|---|---|---|---|---|
| *1 Poor mouth feel because macaronis stick to each other and have a sticky surface | | | | | | | | |

### (Production Examples 19 to 29)

Except for allowing 30 g of a sauce containing 2% by mass of gelatin (GBL-200; the product of Nitta Gelatin Inc.) to 100 g of boiled macaroni in place of the aqueous gelatin solution, the frozen cooked macaronis of Production Examples 19 to 29 were produced by the same procedure as in Production Examples 1 to 11.

### (Test Example 3)

The frozen cooked macaronis of Production Examples 19 to 29 were frozen-stored and then naturally thawed in the same manner as in Test Example 1. The pastas after thawing were evaluated by 10 panelists based on the evaluation criteria shown in Tables 2 and 5, and average scores were obtained. The results are shown in Table 4.

**[Table 4]**

| Raw material flour (% by mass) | Production Example | | | | | | | | | | |
|---|---|---|---|---|---|---|---|---|---|---|---|
| | 19 | 20 | 21 | 22 | 23 | 24 | 25 | 26 | 27 | 28 | 29 |
| Durum semolina | 100 | 95 | 80 | 60 | 40 | 20 | 15 | 95 | 60 | 20 | 15 |
| Acetylated tapioca starch | - | 5 | 20 | 40 | 60 | 80 | 85 | - | - | - | - |
| Hydroxyprop ylated tapioca starch | - | - | - | - | - | - | - | 5 | 40 | 80 | 85 |
| Mouth feel | 2.8 | 4.0 | 4.5 | 4.7 | 4.6 | 3.9 | 1.7 | 3.8 | 4.6 | 4.5 | 2.0 |
| Texture | 2.6 | 3.6 | 4.2 | 4.6 | 4.3 | 4.2 | 2.7 | 3.5 | 4.5 | 4.1 | 2.7 |
| Appearance | 3.3 | 4.2 | 4.5 | 4.5 | 4.6 | 4.0 | 2.9 | 4.0 | 4.4 | 4.4 | 3.2 |
| Loosening | 3.0 | 4.1 | 4.3 | 4.3 | 4.2 | 3.2 | 1.9 | 4.2 | 4.3 | 3.7 | 2.1 |

**[Table 5]**

| | | |
|---|---|---|
| Appearance of noodle | 5 | Noodle is shiny and has an excellent appearance. |
| | 4 | Noodle is shiny and has a favorable appearance. |
| | 3 | Noodle is shiny but partly dry |
| | 2 | Noodle is partly dry and slightly less shiny. |
| | 1 | Noodle is largely dry and less shiny. |
| Loosening of noodle | 5 | Noodle is free from lumps and very easily loosened. |
| | 4 | Noodle is almost free from lumps and easily loosened. |
| | 3 | Noodle is slightly lumpy but loosened. |
| | 2 | Noodle is lumpy and is not loosened partly. |
| | 1 | Noodle forms a large lump or has many lumps and is particularly not loosened partly. |

### (Production Examples 30 to 37)

Boiled macaroni was produced by the same procedure as in Production Example 4 and divided into polyethylene trays at 100 g per tray. To 100 g of the boiled macaroni thus divided, a sauce containing gelatin (GBL-200; the product of Nitta Gelatin Inc.) in the amounts shown in Table 6 (i.e., meat sauce manufactured by Nisshin Foods Inc.) was added, followed by thorough mixing to allow 30 g of the sauce to attach to the entire surface of the boiled macaroni. On top of the macaroni, 30 g of the same meat sauce as above was additionally placed, and the macaroni was quickly frozen at -35°C, whereby frozen cooked macaronis with sauce of Production Examples 30 to 37 were produced.

### (Test Example 4)

The frozen cooked macaronis of Production Examples 30 to 37 were frozen-stored and then naturally thawed in the same manner as in Test Example 1. The pastas after thawing were evaluated by 10 panelists based on the evaluation criteria shown in Tables 2 and 5, and average scores were obtained. The results are shown in Table 6.

**[Table 6]**

| Raw material flour (% by mass) | Production Example | | | | | | | |
|---|---|---|---|---|---|---|---|---|
| | 30 | 31 | 32 | 33 | 34 | 35 | 36 | 37 |
| Durum semolina | 60 | 60 | 60 | 60 | 60 | 60 | 60 | 60 |
| Acetylated tapioca starch | 40 | 40 | 40 | 40 | 40 | 40 | 40 | 40 |
| Amount of sauce (containing gelatin) adhering | 30+30 | 30+30 | 30+30 | 30+30 | 30+30 | 30+30 | 30+30 | 30+30 |
| Gelatin concentration in sauce (% by mass) | 0 | 0.05 | 0.1 | 0.3 | 2.0 | 6.0 | 8.0 | 10.0 |
| Mouth feel | 2.2 | 3.3 | 4.0 | 4.4 | 4.6 | 4.4 | 4.3 | 4.2^{*1} |
| Texture | 1.5 | 3.5 | 3.9 | 4.4 | 4.7 | 4.5 | 4.5 | 4.3 |
| Appearance | 3.3 | 3.3 | 3.8 | 4.2 | 4.6 | 4.8 | 4.6 | 4.7 |
| Loosening | 3.1 | 3.5 | 4.4 | 4.5 | 4.3 | 4.2 | 4.0 | 1.5 |

| | | | | | | | | |
|---|---|---|---|---|---|---|---|---|
| *1 Poor mouth feel because macaronis stick to each other and has a sticky surface | | | | | | | | |

### (Production Examples 38 to 48)

Wheat flour (Toku Suzume; Nisshin Flour Milling Inc.) and acetylated tapioca starch (Ajisai; the product of Matsutani Chemical industry Co., Ltd.) or hydroxypropylated tapioca starch (Yuri; the product of Matsutani Chemical industry Co., Ltd.) were mixed in the amounts shown in Table 7 below and 10% brine (45%) was added thereto, followed by kneading to obtain noodle dough. The resulting dough was rolled out with a roller and cut with a cutting blade (10-count) to produce a fresh udon noodle. The fresh udon noodle thus obtained was boiled in hot water until a yield of 250% was obtained, then cooled with water, drained and then divided into polypropylene trays at 100 g per tray. To 100 g of the boiled udon noodle thus divided, 10 g of an aqueous solution containing 2% by mass of gelatin (GBL-200; the product of Nitta Gelatin Inc.) was added, followed by thorough mixing to allow the aqueous gelatin solution to attach to the entire surface of the udon noodle. Subsequently, the boiled udon noodle attached with the aqueous gelatin solution was quickly frozen at-35°C, whereby the frozen cooked udon noodles of Production Examples 38 to 48 were produced.

### (Test Example 5)

The frozen cooked udon noodles of Production Example 38 to 48 were removed from the trays and packed in polypropylene bags, and then stored at -18°C. After three months, the frozen udon noodles were removed from the bags and naturally thawed at room temperature of 20°C. The udon noodles after thawing were evaluated by 10 panelists based on the evaluation criteria shown in Table 8, and average scores were obtained. The results are shown in Table 7.

**[Table 7]**

| Raw material flour (% by mass) | Production Example | | | | | | | | | | |
|---|---|---|---|---|---|---|---|---|---|---|---|
| | 38 | 39 | 40 | 41 | 42 | 43 | 44 | 45 | 46 | 47 | 48 |
| Wheat flour | 100 | 95 | 80 | 60 | 40 | 20 | 15 | 95 | 60 | 20 | 15 |
| Acetylated tapioca starch | - | 5 | 20 | 40 | 60 | 80 | 85 | - | - | - | - |
| Hydroxypropyl ated tapioca starch | - | - | - | - | - | - | - | 5 | 40 | 80 | 85 |
| Mouth feel | 2.1 | 3.8 | 4.1 | 4.5 | 4.4 | 3.5 | 2.6 | 3.5 | 4.1 | 4.4 | 2.4 |
| Texture | 1.8 | 3.9 | 4.4 | 4.7 | 4.5 | 4.3 | 2.9 | 3.3 | 4.2 | 4.4 | 2.5 |

**[Table 8]**

| | | |
|---|---|---|
| Mouth feel of noodle | 5 | Mouth feel is very smooth and favorable |
| | 4 | Mouth feel is smooth and slightly favorable |
| | 3 | Mouth feel is slightly smooth |
| | 2 | Mouth feel is slightly less smooth and poor |
| | 1 | Mouth feel lacks smoothness and is poor |
| Texture of noodle | 5 | Noodle has an adequately chewy and resilient texture (*mochimochi*) without crumbliness, and has a favorable texture. |
| | 4 | Noodle has a slightly crumbly, but chewy and resilient texture (*mochimochi*) and has a favorable texture |
| | 3 | Noodle has a slightly poorly chewy and resilient (*mochimochii*), brittle, and crumbly texture |
| | 2 | Noodle has a poorly chewy and resilient (*mochimochi*), brittle and crumbly texture |
| | 1 | Noodle is an extremely poorly chewy and resilient (*mochimochi*) and brittle and crumbly texture. |

## Claims

1. A method for manufacturing a frozen cooked noodle, comprising:
obtaining a noodle produced from raw material flour comprising 5 to 80% by mass of processed tapioca starch;
gelatinizing the noodle;
allowing a composition comprising gelatin to attach to the gelatinized noodle thus obtained; and
freezing the noodle attached with the composition.

2. The method according to claim 1, wherein the composition comprising gelatin is an aqueous gelatin solution comprising 0.1 to 8% by mass of gelatin.

3. The method according to claim 1, wherein the composition comprising gelatin is a sauce comprising 0.1 to 8% by mass of gelatin.

4. The method according to any one of claims 1 to 3, wherein an amount of the composition comprising gelatin attached to the gelatinized noodle is 3% by mass or more relative to 100% by mass of the gelatinized noodle.

5. The method according to any one of claims 1 to 4, wherein the processed tapioca starch is one or more selected from the group consisting of esterified tapioca starch, etherified tapioca starch and cross-linked tapioca starch.

6. The method according to any one of claims 1 to 5, wherein the processed tapioca starch is one or more selected from the group consisting of acetylated tapioca starch and hydroxypropylated tapioca starch.

7. The method according to any one of claims 1 to 6, wherein the raw material flour further comprises 18 to 95% by mass of grain flour.

8. A method for manufacturing a cooked noodle, comprising thawing the frozen cooked noodle manufactured by the method according to any one of claims 1 to 7.
